# EUROPEAN PATENT SPECIFICATION

(11) **EP 3 256 317 B1**
(45) Date of publication and mention of the grant of the patent: **18.09.2019**
(21) Application number: 16704279.5
(22) Date of filing: 04.02.2016
(51) Int. Cl.: B32B 27/08, B32B 27/32

(54) **LAMINATED STRUCTURE AND STAND UP POUCH MADE THEREOF**
SCHICHTSTRUKTUR UND DARAUS HERGESTELLTER STANDBEUTEL
STRUCTURE STRATIFIÉE ET SAC À MAINTIEN VERTICAL FABRIQUÉ À PARTIR DE CELLE-CI

(30) Priority: 10.02.2015 US 201562114099 P
(43) Date of publication of application: 20.12.2017
(73) Proprietor: Nova Chemicals (International) S.A., 1700 Fribourg (CH)
(72) Inventor: CLARE, Robert, Cochrane, Alberta T4C 1R8 (CA)
(74) Representative: Mewburn Ellis LLP
(86) International application number: PCT/IB2016/050585
(87) International publication number: WO 2016/128865

(56) References cited:
- US-A- 5 843 540
- US-A1- 2005 255 268
- US-A1- 2012 033 901
- US-A1- 2013 095 335

## Description

### TECHNICAL FIELD

This invention relates to a printed, laminated structure that is prepared by laminating a first polyethylene web to a second polyethylene web. The laminated structure is especially suitable for the preparation of a stand up pouch.

### BACKGROUND ART

Stand up pouch ("SUP") packages are in widespread commercial use as packaging for consumer goods. These pouches are attractive to consumers and, when properly designed, make very efficient use of a minimal amount of polymeric material to prepare the package.

SUP were first produced about 50 years ago. An early design uses a laminate of a layer of PolyEthyleneTerephalate (PET) and a layer of PolyEthylene (PE). This type of design is still in commercial use with a typical structure having a thin layer (about 0.5 mils, or 0.12 mm thick) of PET and a thicker layer (about 3 mils or 0.75mm) of PE.

A problem with this SUP design is that the pouches are too difficult to recycle because of the different materials of construction.

It is known to prepare a "recyclable" SUP that is prepared only with polyethylene (or with at least 95% PE, as many recycling facilities are able to recycle a coextruded or laminated film that contains at least 95% PE as a "pure" PE material).

However, polyethylene suffers from some disadvantages which make it difficult to design a SUP using polyethylene as the only material of construction.

For example, high density polyethylene ("HDPE") provides the stiffness that is required for a stand up structure but the physical properties and optical properties of HDPE (such as haze and gloss) are comparatively poor. In contrast, linear low density polyethylene ("LLDPE") provides very good physical and optical properties but poor stiffness. The physical and optical properties of Medium Density Polyethylene (MDPE) generally fall in between those of HDPE and LLDPE. Accordingly, a simple "all PE" SUP design will not have the combination of optical and stiffness properties that are provided by the prior art design which contains a layer of PET and a layer of PE.

The present invention allows the preparation of a recyclable SUP that is prepared using at least 95% weight PE (based on the total weight of polymeric material used to prepare the SUP) and a desirable balance of stiffness and optical properties.

US 2005/0255268 A1 describes a gas barrier packaging laminate comprising outer layers of heat-sealable polyolefin, two polymer carrier layers each being coated with a SiOx gas barrier layer, and an intermediate polymer layer that comprises at least first and second part-layers, whereof said first part-layer has a higher stiffness than said second part-layer and said second part-layer has higher elastomeric properties than said first part-layer.

### DISCLOSURE OF INVENTION

In one embodiment, the present invention provides:
a laminated structure that is made from polymeric material, said laminated structure comprising
A) an outer web comprising
   A.1) a first-A layer comprising an HDPE composition; and
   A.2) a second-A layer comprising polyethylene selected from the group consisting of LLDPE, MDPE and HDPE,
B) an inner web comprising
   B.1) a first-B layer that is in contact with said outer web, wherein said first-B layer comprises polyethylene selected from the group consisting of LLDPE, and MDPE;
   B.2) a second-B layer comprising an HDPE composition; and
   B.3) a third-B layer comprising a sealant polyethylene composition, with the proviso that
      I) said outer web is laminated to said inner web;
      II) said laminated structure is printed at the interface between said outer layer and said inner layer; and
      III) said HDPE, MDPE, LLDPE and sealant polyethylene collectively form at least 95 weight % of said polymeric material that is used to prepare said laminated structure.

Thus, the laminated structure is made from polymeric material.

In one embodiment, the polymeric material consists essentially of different types of polyethylene - the only polymeric material used to make the SUP of this embodiment is polyethylene. Suitable types of polyethylene include:
1) High Density Polyethylene (HDPE) - a polyethylene homopolymer or copolymer having a density of from about 0.95 to about 0.97 g/cc;
2) Medium Density Polyethylene (MDPE) - a polyethylene copolymer having a density of from about 0.93 to about 0.95 g/cc;
3) Linear Low Density Polyethylene (LLDPE) - a polyethylene copolymer having a density of from about 0.915 to about 0.93 g/cc; and
4) a sealant polyethylene - a polyethylene material that is suitable for the preparation of a heat formed seal, especially a polyethylene selected from the group consisting of 1) a polyethylene copolymer having a density of from about 0.88 to 0.915 g/cc ("VLDPE"); and 2) a high pressure low density polyethylene (LD) - a polyethylene homopolymer prepared with a free radical initiator in a high pressure process, having a density of from about 0.91 to about 0.93 g/cc.

The laminated structure of this invention is prepared using two distinct webs that are laminated together.

Each web contains at least one layer of HDPE. The HDPE layers provide rigidity/stiffness to the SUP. These HDPE layers are separated by at least one layer of lower density polyethylene (such as LLDPE) and this lower density polyethylene provides impact and puncture resistance. In addition, by separating the layers of rigid HDPE, the overall rigidity and torsional strength of the SUP is improved in comparison to a structure that contains an equivalent amount/thickness of HDPE in a single layer - in a manner that might be referred to as an "I beam" effect (by analogy to the steel I beams that are in wide sue for the construction of buildings).

The laminated structure of this invention is especially suitable for the preparation of a Stand Up Pouch ("SUP").

SUP packages are well known. They are typically prepared from "roll stock" (i.e. a film - or the laminated structure of this invention) using a variety of well-known techniques and machines.

A good review of SUP design and manufacture is provided in United States Patent 6,722,106 (Bartel et al.; assigned to Recot, Inc.) and the references contained in that patent.

SUP are manufactured in many sizes, and are typically used to package consumer goods in small quantities (e.g. from about 25 mils to 2 liters). The contents of the SUP packages are typically described as being "flowable" - with the term "flowable" being intended to encompass particulate solids (such as candy, nuts, and breakfast cereal); liquids (especially drinks); and pastes/emulsions/purees (such as yogurt and baby foods). In an embodiment, the SUP is designed to allow the contents of the opened package to easily flow from (and/or to be consumed directly from) the SUP. For example, the top of the SUP may be equipped with an integral straw (for drinks) or spout for pastes, emulsions, purees, and the like. Such designs are well-known and one example is disclosed in Canadian Patent application 2,612,940 (Rogers).

The SUP is typically opened at the top of the package. The SUP may be opened with a tear strip; or a fitment (or cap) which allows the package to be re-closed; or other caps/closures, etc. that are known to those skilled in the art.

As previously noted, the conventional PET/PE SUP have a balance of stiffness (or rigidity) and optical properties that is far superior to the properties of conventional "all PE" designs for SUP. It is known to prepare an "all PE" SUP having good rigidity (using HDPE) but the optical properties of such packages were poor.

In one embodiment, the present invention mitigates this problem by using at least one layer of a lower density polyethylene (in the inner web).

In another embodiment, the optical properties are improved through the use of a nucleating agent. In another embodiment, the optical properties are improved through the use of Machine Direction Orientation (MDO) of the outer/print web (as illustrated in the examples). In yet another embodiment, the optical properties are improved by the use of MDO on a web that contains a layer of nucleated HDPE.

### BEST MODE FOR CARRYING OUT THE INVENTION

The laminated structure of this invention is prepared with two webs, each of which must contain at least one layer of HDPE. At least one HDPE layer in the first web is separated from at least one HDPE layer in the second web by a layer of lower density polyethylene, thereby optimizing the rigidity of the SUP for a given amount of HDPE.

The two webs are laminated together.

In one embodiment, the laminated structure is printed at the interface between the two webs - i.e. either on the interior surface of the first web or on the exterior surface of the second web.

Detailed descriptions of the first (exterior) web; the second (interior) web; the adhesive, and the printing follow.

### 1. First (Exterior) Web, or "A" Web

The first (exterior) web forms the outer wall of the laminated structure.

In one embodiment, the laminated structure of this invention is printed on the interface between the first web and the second (interior) web.

This, in turn, means that it is necessary to "look through" the exterior web in order to see the printing. Accordingly, it is desirable for the exterior web to have low haze values. In addition, a high "gloss" is desirable as many consumers perceive a high gloss finish as being an indication of high quality.

Furthermore, it is desirable for the exterior layer to provide stiffness/rigidity to the laminated structure so that a SUP made from the laminated structure will be self-supporting.

Thus, a balance of good optical properties and stiffness is desired for the exterior web. It is known that HDPE provides the desired stiffness but it is also known that HDPE has poor optical properties. The present invention resolves this problem as follows.

In one embodiment, a very thin layer of HDPE is used in the exterior web, together with a layer of a lower density polyethylene; and

In another embodiment, the exterior web is subjected to Machine Direction Orientation (MDO) in an amount that is sufficient to improve the modulus (stiffness) and optical properties of the web.

Further descriptions of these two embodiments follow.

### Multi-layer Outer Web, or Web A

In general, the use of a thick monolayer HDPE film to form the exterior web of a SUP could be used to provide a structure with adequate stiffness. However, a thick layer of HDPE would suffer from poor optical properties. This could be resolved by printing the exterior (skin) side of the outer web to form an opaque SUP. However, this design is not very abuse resistant as the printing can be easily scuffed and damaged during transportation and handling of the SUP.

In one embodiment, the present invention mitigates these problems by providing a coextruded multilayer film for the exterior web in which at least one layer ("layer A.1") is prepared from HDPE and at least one layer ("layer A.2") is prepared from a lower density polyethylene (such as LLDPE, LD or VLDPE).

In one embodiment, the HDPE is further characterized by having a melt index, I₂, of from 0.1 to 10 (especially from 0.3 to 3) grams/10 minutes.

In one embodiment, the LLDPE is further characterized by having a melt index, I₂, of from 0.1 to 5 (especially from 0.3 to 3) grams/10 minutes.

In one embodiment, the LLDPE is further characterized by being prepared using a single site catalyst (such as a metallocene catalyst) and having a molecular weight distribution, Mw/Mn (i.e. weight average molecular weight divided by number average molecular weight) of from about 2 to about 4. This type of LLDPE is typically referred to as sLLDPE.

In one embodiment, the very low density polyethylene (VLDPE) is an ethylene copolymer having a density of from about 0.88 to 0.91 g/cc and a melt index, I₂, of from about 0.5 to 10 g/cc. All of the materials described above are well known and commercially available.

The lower density polyethylene improves the optics of the multilayer web. In one embodiment, the multilayer structure is a three layer, coextruded film of the type A/B/A where A is an LLDPE (especially a single site catalyzed LLDPE) and B is an HDPE composition. This type of film provides excellent optical properties - to the point where some of these films have been observed to have better optical properties than a monolayer film made with the same LLDPE.

In another embodiment, the LLDPE used in web A is blended with a minor amount (from 0.2 to 10 weight %) of an LD polyethylene having a melt index, I₂, of from 0.2 to 5, especially from 0.2 to 0.8. Certain blends of these LLDPE and LLDPE and LD have been observed to have superior optical properties and superior stiffness in comparison to the LLDPE alone (particularly when the LLDPE is a sLLDPE).

The use of an LD resin having a melt index of from about 0.2 to 0.8 grams/10 minutes has been observed to be especially effective for this purpose (and persons skilled in the art commonly refer to this type of LD resin as a "fractional melt LD").

In another embodiment, the LLDPE used in web A is blended with a minor amount (from 0.2 to 10 weight %) of an HDPE resin and a nucleating agent.

The term nucleating agent, as used herein, is meant to convey its conventional meaning to those skilled in the art of preparing nucleated polyolefin compositions, namely an additive that changes the crystallization behavior of a polymer as the polymer melt is cooled.

A review of nucleating agents is provided in USP 5,981,636; 6,465,551 and 6,599,971.

Examples of conventional nucleating agents which are commercially available and in widespread use as polypropylene additives are the dibenzylidene sorbital esters (such as the products sold under the trademark MILLAD® 3988 by Milliken Chemical and IRGACLEAR® by Ciba Specialty Chemicals).

The nucleating agents should be well dispersed in the polyethylene. The amount of nucleating agent used is comparatively small - from 200 to 10,000 parts by million per weight (based on the weight of the polyethylene) so it will be appreciated by those skilled in the art that some care must be taken to ensure that the nucleating agent is well dispersed. It is preferred to add the nucleating agent in finely divided form (less than 50 microns, especially less than 10 microns) to the polyethylene to facilitate mixing.

Examples of nucleating agents which may be suitable for use in the present invention include the cyclic organic structures disclosed in USP 5,981,636 (and salts thereof, such as disodium bicyclo [2.2.1] heptene dicarboxylate); the saturated versions of the structures disclosed in USP 5,981,636 (as disclosed in USP 6,465,551; Zhao et al., to Milliken); the salts of certain cyclic dicarboxylic acids having a hexahydrophtalic acid structure (or "HHPA" structure) as disclosed in USP 6,599,971 (Dotson et al., to Milliken); phosphate esters, such as those disclosed in USP 5,342,868 and those sold under the trade names NA-11 and NA-21 by Asahi Denka Kogyo and metal salts of glycerol (especially zinc glycerolate). The calcium salt of 1,2 - cyclohexanedicarboxylic acid, calcium salt (CAS registry number 491589-22-1) typically provides good results for the nucleation of HDPE. The nucleating agents described above might be described as "organic" (in the sense that they contain carbon and hydrogen atoms) and to distinguish them from inorganic additives such as talc and zinc oxide. Talc and zinc oxide are commonly added to polyethylene (to provide anti-blocking and acid scavenging, respectively) and they do provide some limited nucleation functionality.

The "organic" nucleating agents described above are generally better (but more expensive) nucleating agents than inorganic nucleating agents. In an embodiment, the amount of organic nucleating agent is from 200 to 2000 parts per million (based on the total weight of the polyethylene in the layer that contains the nucleating agent).

These LLDPE/HDPE/nucleating agent blends have also been found to provide superior optical properties and higher modulus (higher stiffness) than 100% LLDPE.

In another embodiment, the outer web is a three layer, coextruded film of the type A/B/A where A is an HDPE and B is a lower density polyethylene, especially the LLDPE compositions described above (including the LLDPE compositions that are blends with LD and LLDPE compositions that are blends with HD and a nucleating agent). These films provide good rigidity.

### Machine Direction Orientation (MDO) of Outer Web

In another embodiment, the outer web is a multilayer, coextruded film that comprises at least one layer of HDPE and at least one layer of a lower density polyethylene such as MDPE or LLDPE. The structure is subjected to Machine Direction Orientation (or MDO).

A description of such structures and the preparation of the structures follow.

### MDO Web

The MDO web is prepared from a multilayer film in which at least one of the layers is prepared from an HDPE composition and at least one of the layers is prepared from a polyethylene composition having a lower density than the HDPE composition.

Machine Direction Orientation (MDO) is well-known to those skilled in the art and the process is widely described in the literature. MDO takes place after a film has been formed. The "precursor" film (i.e. the film as it exists prior to the MDO process) may be formed in any conventional film molding process. Two film molding processes that are in wide commercial use (and are suitable for preparing the precursor film) are the blown film process and the cast film process.

The precursor film is stretched (or, alternatively stated, strained) in the MDO process. The stretching is predominantly in one direction, namely, the "machine direction" from the initial film molding process (i.e. as opposed to the transverse direction). The thickness of the film decreases with stretching. A precursor film that has an initial thickness of 10 mils and a final thickness after stretching of 1 mil is described as having a "stretch ratio" or "draw down" ratio of 10:1 and a precursor film that has an initial thickness of 10 ml and a final thickness of 2 ml having a "stretch" or "draw down" ratio of 2:1.

In general, the precursor film may be heated during the MDO process. The temperature is typically higher than the glass transition temperature of the polyethylene and lower than the melting temperature and more specifically, is typically from about 70 to about 120°C for a polyethylene film. Heating rollers are generally used to provide this heat.

A typical MDO process utilizes a series of rollers that operate at different speeds to apply a stretching force on a film. In addition, two or more rollers may cooperate together to apply a comparison force (or "nip") on the film.

The stretched film is generally overheated (i.e. maintained at an elevated temperature - typically from about 90 to 125°C) to allow the stretched film to relax.

The preparation of a SUP from MDO polyethylene is taught in U.S. Patent application 2012/0033901 (to Votaw). However, the SUP taught by Votaw is prepared only from an MDO film and a sealant film. It will be recognized by those skilled in the art that an MDO polyethylene film is prone to shrinkage when heated. Thus, the MDO package of Votaw may be prone to shrinkage and/or wrinkling when it is used, for example, in a hot fill application. In contrast, the laminated structure of the present invention must contain a second (interior) web. This interior web protects the exterior (MDO) web from excessive heat during a hot fill operation. In addition, the second web is laminated to the first web. The resulting laminated structure provides some resistance against the shrinking forces that may be applied to the MDO web when the SUP is exposed to heat.

### B. Inner Web

The inner web forms the inside of a SUP that is prepared from the laminated structure.

The inner web is a coextruded film that comprises at least three layers, namely
B.1) a first layer (or interface skin layer) that is prepared from at least one polyethylene selected from the group consisting of LLDPE and MDPE;
B.2) a core layer comprising an HDPE composition; and
B.3) a sealant layer (or interior skin layer) that is prepared from a sealant polyethylene.

Further descriptions follow.

### B.1 Interface Skin Layer

One skin layer of the inner web is prepared from a polyethylene composition having a lower density than HDPE so as to provide a layer having enhanced impact and tear strength properties in comparison to the layers prepared from HDPE. In one embodiment, this layer is made predominantly from an LLDPE, (including sLLDPE) having a melt index of from 0.3 to 3 grams per 10 minutes. The layer may also be prepared using a major amount of LLDPE (or sLLDPE) and a minor amount of LD (especially a fractional melt LD, as described above) or the LLDPE + HDPE + nucleating agent blend as described above.

In another embodiment, this skin layer may be prepared with MDPE (or a blend of MDPE with a minor amount of another polyethylene, such as the blends with LD; and the blends with HDPE and nucleating agent described above).

In one embodiment, this skin layer is printed. Accordingly, it is within the scope of this invention to incorporate any of the well-known film modifications that facilitate the printing process. For example, the skin layer may be subjected to a corona treatment to improve ink adhesion. In another embodiment, the skin layer may contain an opacifying agent (such as talc, titanium oxide or zinc oxide) to improve the appearance of the printed surface.

### B.2 Core layer

The inner web comprises at least one core layer that is prepared from an HDPE composition.

HDPE is a common item of commerce. Most commercially available HDPE is prepared from a catalyst that contains at least metal (especially chromium or a group IV transition metal - Ti, Zr or Hf).

HDPE that is made from a Cr catalyst typically contains some long chain branching (LCB). HDPE that is made from a group IV metal generally contains less LCB than HDPE made from a Cr catalyst.

As used herein, the term HDPE refers to a polyethylene (or polyethylene blend composition, as required by context) having a density of from about 0.95 to 0.97 grams per cubic centimeter (g/cc). In an embodiment, the melt index ("12") of the HDPE is from about 0.2 to 10 grams per 10 minutes.

In an embodiment, the HDPE is provided as a blend composition comprising two HDPEs having melt indices that are separated by at least a decade. Further details of this HDPE blend composition follow.

### HDPE Blend Composition

### Blend Components

### Blend Component a)

Blend component a) of the polyethylene composition used in this embodiment comprises an HDPE with a comparatively high melt index. As used herein, the term "melt index" is meant to refer to the value obtained by ASTM D 1238 (when conducted at 190°C, using a 2.16 kg weight). This term is also referenced to herein as "I₂" (expressed in grams of polyethylene which flow during the 10 minute testing period, or "gram/10 minutes"). As will be recognized by those skilled in the art, melt index, I₂, is in general inversely proportional to molecular weight. In one embodiment, blend component a) has a comparatively high melt index (or, alternatively stated, a comparatively low molecular weight) in comparison to blend component b).

The absolute value of I₂ for blend component a) in these blends is generally greater than 5 grams/10 minutes. However, the "relative value" of I₂ for blend component a) is more important and it should generally be at least 10 times higher than the I₂ value for blend component b) [which I₂ value for blend component b) is referred to herein as I₂']. Thus, for the purpose of illustration: if the I₂' value of blend component b) is 1 gram/10 minutes, then the I₂ value of blend component a) is preferably at least 10 grams/10 minutes.

In one embodiment, blend component a) may be further characterized by:
i) having a density of from 0.95 to 0.97 g/cc; and
ii) being present in an amount of from 5 to 60 weight % of the total HDPE blend composition (with blend component b) forming the balance of the total composition) with amounts of from 10 to 40 weight %, especially from 20 to 40 weight %, being generally preferred. It is permissible to use more than one high density polyethylene to form blend component a).

The molecular weight distribution [which is determined by dividing the weight average molecular weight (Mw) by number average molecular weight (Mn) where Mw and Mn are determined by gel permeation chromatography, according to ASTM D 6474-99] of component a) is preferably from 2 to 20, especially from 2 to 4. While not wishing to be bound by theory, it is believed that a low Mw/Mn value (from 2 to 4) for component a) may improve the crystallization rate and overall barrier performance of blown films and web structures prepared in accordance with this invention.

### Blend Component b)

Blend component b) is also a high density polyethylene which has a density of from 0.95 to 0.97 g/cc (preferably from 0.955 to 0.968 g/cc).

The melt index of blend component b) is also determined by ASTM D 1238 at 190°C using a 2.16 kg load. The melt index value for blend component b) (referred to herein as 12') is lower than that of blend component a), indicating that blend component b) has a comparatively higher molecular weight. The absolute value of 12' is preferably from 0.1 to 2 grams/10 minutes.

The molecular weight distribution (Mw/Mn) of component b) is not critical to the success of this invention, though a Mw/Mn of from 2 to 4 is preferred for component b).

Finally, the ratio of the melt index of component b) divided by the melt index of component a) is preferably greater than 10/1.

Blend component b) may also contain more than one HDPE resin.

### Overall HDPE Blend Composition

The overall high density blend composition is formed by blending together blend component a) with blend component b). In an embodiment, this overall HDPE composition has a melt index (ASTM D 1238, measured at 190°C with a 2.16 kg load) of from 0.5 to 10 grams/10 minutes (preferably from 0.8 to 8 grams/10 minutes).

The blends may be made by any blending process, such as: 1) physical blending of particulate resin; 2) co-feed of different HDPE resins to a common extruder; 3) melt mixing (in any conventional polymer mixing apparatus); 4) solution blending; or, 5) a polymerization process which employs 2 or more reactors.

A suitable HDPE blend composition may be prepared by melt blending the following two blend components in an extruder:
from 10 to 30 weight % of component a): where component a) is an HDPE resin having a melt index, 12, of from 15-30 grams/10 minutes and a density of from 0.95 to 0.97 g/cc with,
from 90 to 70 weight % of component b): where component b) is an HDPE resin having a melt index, 12, of from 0.8 to 2 grams/10 minutes and a density of from 0.95 to 0.97 g/cc.

An example of a commercially available HDPE resin which is suitable for component a) is sold under the trademark SCLAIR® 79F, which is an HDPE resin that is prepared by the homopolymerization of ethylene with a conventional Ziegler Natta catalyst. It has a typical melt index of 18 grams/10 minutes and a typical density of 0.963 g/cc and a typical molecular weight distribution of about 2.7.

Examples of commercially available HDPE resins which are suitable for blend component b) include (with typical melt index and density values shown in brackets):
SCLAIR® 19G (melt index =1.2 grams/10 minutes, density = 0.962 g/cc);
MARFLEX® 9659 (available from Chevron Phillips, melt index = 1 grams/10 minutes, density = 0.962 g/cc); and
ALATHON® L 5885 (available from Equistar, melt index = 0.9 grams/10 minutes, density = 0.958 g/cc).

A preferred HDPE blend composition is prepared by a solution polymerization process using two reactors that operate under different polymerization conditions. This provides a uniform, in situ blend of the HDPE blend components. An example of this process is described in U.S. Patent 7,737,220 (Swabey et al.).

In one embodiment, the HDPE composition is prepared using only ethylene homopolymers. This type of composition is especially suitable if it is desired to optimize (maximize) the barrier properties of the structure.

In another embodiment, the HDPE composition may be prepared using copolymers as this will enable some improvement in the physical properties, especially impact resistance. In yet another embodiment, a minor amount (less than 30 weight %) of a lower density polyethylene may be blended into the HDPE composition (as again, this can enable some improvement in impact resistance).

In an embodiment, the HDPE blend composition described above is combined with an organic nucleating agent (as previously described) in an amount of from about 300 to 3000 parts per million by weight, based on the weight of the HDPE blend composition. The use of (previously described) calcium salt of 1-2 cyclohexane dicarboxylic acid, calcium salt (CAS 491589-22-1) is especially suitable. It is preferred to use an HDPE composition that is prepared with a group IV transition metal (especially Ti) when the HDPE composition contains a nucleating agent.

This type of "nucleated" core layer has been observed to provide outstanding barrier properties (i.e. reduced transmission of water, gas, and grease), which is desirable for many packaging applications.

In addition, the presence of the nucleating agent has been observed to improve the modulus of the HDPE layer (in comparison to a non-nucleated layer of equivalent thickness).

The use of a nucleated HDPE blend composition of the type described above provides a "barrier" to oxygen and water transmission. The performance of this barrier layer is suitable for many goods. However, it will be recognized by those skilled in the art that improved "barrier" performance can be achieved through the use of certain "barrier" polymers such as ethylene-vinyl-alcohol (EVOH); ionomers and polyamides. The use of large amounts of such non-polyethylene barrier resins can make it very difficult to recycle films/structures/SUP that are made with the combination of polyethylene and non-polyethylene materials. However, it is still possible to recycle such structures if low amounts (less than 10 weight %, especially less than 5 weight %) of the non-polyethylene materials.

It will also be recognized by those skilled in the art that the use of certain non-polyethylene barrier resins will also require the use of a "tie layer" to allow adhesion between the non-polyethylene barrier layer and the remaining layers of polyethylene.

### B.3 Sealant Layer

The interior web has two exterior layers, or "skin" layers, namely the interface skin layer (layer B.1, above) and the interior skin layer (also referred to herein as the sealant layer. The sealant layer is prepared from a "sealant" polyethylene - i.e. a type of polyethylene that readily melts and forms seals when subjected to sealing conditions. Those skilled in the art will recognize that two types of polyethylene are preferred for use as sealants, namely:
1) polyethylene copolymers having a density of from about 0.88 to 0.915 g/cc; and
2) LD polyethylene (as previously described).

The use of lower density polyethylene copolymers is preferred. As a general rule, the cost of these lower density polyethylene's increases as the density decreases, so the "optimum" polyethylene sealant resin will typically be the highest density polyethylene that provides a satisfactory seal strength. A polyethylene having a density of from about 0.900 to 0.912 g/cc will provide satisfactory results for many applications.

Other examples of sealant polyethylenes include ethylene-vinyl acetate (EVA) and "ionomers" (e.g. copolymers of ethylene and an acidic comonomer, with the resulting acid comonomer being neutralized by, for example, sodium, zinc or lithium; ionomers are commercially available under the trademark SURLYN®).

The use of EVA and/or ionomers is less preferred because they can cause difficulties when the SUP is recycled (however, as previously noted, many recycling facilities will accept a SUP that contains up to 5% of EVA or ionomer and recycle the SUP as if it were constructed from 100% polyethylene).

### Printing Process

As previously noted, the laminated structure of this invention is printed at the interface between the two webs. Suitable processes include the well-known flexographic printing and rotogravure printing techniques, which typically use nitro cellulose or water based inks.

### Lamination/Fabrication Process

One step in the fabrication of the laminated structure requires the lamination of the first web to the second web. There are many commercially available techniques for the lamination step, including the use of a liquid glue (which may be solvent based, solventless, or water based); a hot melt glue, and thermal bonding.

In one embodiment, the inner web B has a total thickness that is about twice that of the outer web A.

For example, the outer web A may have a thickness of from about 1 to about 1.4 mils and the inner web may have a thickness of from about 2 to about 3 mils.

In a specific embodiment, the outer web consists of an exterior skin layer made from HDPE (having a thickness of about 0.8 mils) and a layer of LLDPE having a thickness of about 0.4 mils. In this embodiment, the inner layer may be an A/B/C structure where layer A is made from LLDPE (having a thickness of about 0.4 mils; layer B is nucleated HDPE (having a thickness of about 1.5 mils) and layer C is sealant resin (such as VLDPE) having a thickness of 0.3 mils.

It will be recognized by those skilled in the art that the above described thickness may be easily modified to change the physical properties of the SUP. For example, the thickness of the HDPE layers may be increased (if it is desired to produce a stiffer SUP) or the thickness of the LLDPE layer(s) may be increased to improve impact resistance.

The total thickness of the laminated structure (i.e. outer web and inner web) is about 3 to about 4 mils in one embodiment. The SUP is then prepared from the laminated structure using techniques and machines that are known to those skilled in the art. In one embodiment, the laminated structure is sealed using heat seals to form the SUP. In another embodiment, the seals may be formed using ultrasonic sealing.

Test procedures used in the Examples are briefly described below.
1. Melt Index: "I₂", was determined according to ASTM D1238. [Note: I₂ measurements are made with a 2.16 kg weight at 190°C.] Test results are reported in units of grams/10 minutes, or alternatively, decigrams/minute (dg/min).
2. Density was determined using the displacement method according to ASTM D792.
3. Gloss was determined by ASTM D2457.
4. Haze was determined by ASTM D1003.
5. Rigidity test, described below.

Film rigidity was measured using a test procedure that is in substantial accordance with ASTM D2923 ("Rigidity of Polyolefin Film and Sheeting"). The test instrument has a sample platform that contains a linear slot. The sample of the film that is to be tested is placed on the platform and a blade is then used to force the film into the slot. The width of the slot is 10 mm. The film sample is 4" x 4" (10.2 cm to 10.2 cm). The results from the test are plotted on a load (in grams) versus extension (in gm) graph. The peak load that is observed during the test (in grams) is divided by the length of the sample (10.16 cm) to produce a "rigidity" value (reported in grams per cm). The test is conducted in both the machine direction (MD) and traverse direction (TD). Rigidity results may be reported as MD; TD; or the average of MD + TD.

### Part 1 Analysis of Existing SUP Structures

Two SUP containing foods were purchased at a grocery store. Both of these SUP were prepared with a conventional PET/PE structure. The rigidity of these packages were measured using the rigidity test and found to be about 5.5 g/cm in both MD and TD direction. This value was set as a benchmark for the SUP designs of the present invention.

### Part 2 Material List

The following polyethylene resins were used in the examples.

| | **Resin Type** | **Melt Index (g/10 min)** | **Density (g/cc)** | **Comonomer** |
|---|---|---|---|---|
| 1. | ZN-1 | 1 | 0.958 | none |
| 2. | ZN-2 | 0.8 | 0.934 | hexene |
| 3. | ZN-3 | 0.9 | 0.912 | octene |
| 4. | ZN-1 .nuc | 1 | 0.958 | none |
| 5. | SSC-1 .nuc | 1.2 | 0.967 | none |
| 6. | SSC-2 | 1 | 0.917 | octene |

The prefix ZN indicates that the polyethylene was prepared with a Ziegler Natta catalyst system. The prefix SSC indicates that the polyethylene was prepared with a single site catalyst system. The term - (nuc) indicates that the resin contains a nucleating agent (aiming point of 1200 parts per million by weight of a commercially available nucleating agent sold under the trademark HYPERFORM® 20E by Milliken Chemicals).

### Outer Web (Non Oriented)

Five blown films were prepared as candidates for the outer web of the stand up pouch. The films were prepared on a conventional blown film line. The total thickness of all the films was 1.15 mils (0.29mm). Films 1.1 and 1.4 were made from only one resin. Films 1.2, 1.3, and 1.5 were multilayer structures containing HDPE and either MDPE or LLDPE. The Machine Direction (MD) and Transverse Direction (TD) stiffness values (expressed in g/cm) for each of these films is shown in Table 1. The thickness of the ZN-1 layer in the multilayer films was 1.15 mils.

**TABLE 1**

| Print Web Films | | |
|---|---|---|
| | **STRUCTURE** | **MD/TD RIGIDITY (g/cm)** |
| 1.1 | ZN-1 | 0.8/0.7 |
| 1.2 | ZN-1/SSC-2 | 0.7/0.7 |
| 1.3 | ZN-1/ ZN-2 | 0.6/0.5 |
| 1.4 | ZN-2 | 0.5/0.56 |
| 1.5 | ZN-1(nuc)/ZN-2 | 0.95/1.06 |

### Outer Web (Machine Direction Oriented)

Sixteen films were prepared on a conventional blown film line. The original thickness of these films was about 6 to 7 mils as shown in Table 2. The films were then subjected to stretching in a Machine Direction Orientation process. The aiming point for the extent of stretching is shown in Table 2. For example, film 2.1 started with a thickness of 6 mils and was stretched with an MDO factor of 6, resulting in a final blown film thickness of 1 mil.

The two layer films (i.e. those shown as having more than one polymer - e.g. 2.3) were prepared such that the thickness ratio between ZN-1 and ZN-2 was 0.75/0.4 - i.e. stretched film having a final thickness of 1.15 mils would have a 0.75 mil layer of ZN-1 and a 0.40 mil layer of ZN-2. Film structures 2.1; 2.2; 2.8; 2.12; and 2.13 are comparative as they are monolayer structures. In addition, the optical properties of these comparative films were visibly poorer relative to the inventive films. Most notably, the layer of structure 2.15 was only 8% (clarity of 92%) and the haze of structure 2.17 was just 3% (clarity of 97%).

In addition, the monolayer structures were observed to be very "splitty" - i.e. it is very easy to tear this structure in the machine direction.

**TABLE 2**

| MDOStiffnessResults Various Including Nucleated | | | | |
|---|---|---|---|---|
| | **Input Structure [thickness]** | **MDO Factor** | **Rigidity MD/TD (g/cm)** | **Thickness (mils)** |
| 2.1 | ZN-2 [6 mil] | 6X | 0.93/0.82 | 1 mil |
| 2.2 | ZN-2 [7mil] | 6X | 1.19/1.19 | 1.15 mil |
| 2.3 | ZN-1(nuc)/ZN-2/ (nuc)19C [6 mil] | 6.5X | 1.18/1.24 | 0.92 mil |
| 2.4 | ZN-1(nuc)/ZN-2 | 6.5X | 1.24/1.16 | 0.92 mil |
| 2.5 | ZN-1(nuc)/ZN-2 (nuc) | 6X | 1.25/1.12 | 1 mil |
| 2.6 | ZN-1/ZN-2 [7 mil] | 6X | 1.19/1.44 | 1.15 mil |
| 2.7 | ZN-1/ZN-2 [7Mil] | 7X | 0.96/1.19 | 1 mil |
| 2.8 | ZN-2 | 6X | 1.03/1.04 | 1 mil |
| 2.9 | ZN-1/ZN-2 [6 mil] | 6.5X | 0.99/0.86 | 0.92 mil |
| 2.10 | ZN-1/ZN-2 [6 mil] | 7X | 0.63/0.77 | 0.85 mil |
| 2.11 | ZN-2 [5 mil] | 6X | 1.05/0.99 | 0.85 mil |
| 2.12 | ZN-2 [7 mil] | 6X | 1.29/1.26 | 1.15 mil |
| 2.13 | ZN-1/ZN-2 [5 mil] | 6X | 1.31/0.98 | 0.85 mil |
| 2.14 | ZN-1/ZN-2 [7 mil] | 6X | 1.85/1.13 | 1.15 mil |
| 2.15 | ZN-1(nuc)/ZN-2 (nuc) [5 mil] | 6X | 0.9/0.84 | 0.85 mil |
| 2.16 | ZN-1(nuc)/ZN-2 (nuc) [7 mil] | 6X | 1.45/1.31 | 1.15 mil |

### Inner Web

As previously noted, the inner web is a coextruded film that comprises at least three layers:
1) a first layer that is prepared form at least one polyethylene selected from the group consisting of LLDPE and MDPE;
2) a core layer comprising an HDPE composition; and
3) a sealant layer that is prepared form a sealant polyethylene.

In an embodiment, the total thickness of the inner web is from 1.8 to 2.6 mils, especially from 2.0 to 2.4 mils.

In an embodiment, the first layer thickness is from 15 to 25% (of the total thickness of the three layers); the second layer is from 60 to 75%; and the third layer is from 10 to 20%.

In a specific embodiment, the three layer film has the following structure.

**TABLE 3**

| Inner Web Structure | | |
|---|---|---|
| **Layer** | **Resin** | **Amount** |
| 1 | ZN-2 | 18% |
| 2 | SSC-1 | 68% |
| 3 | ZN-3 | 14% |

The structure shown in Table 3 has a very good balance of optical properties and rigidity. It is possible to improve the optical properties (reduce haze) by replacing SSC-1 with ZN-1 but this is done at a cost of reduced rigidity.

### Finished Laminated Structure

The finished laminated structure is prepared by laminating the first (outer) web to the second (inner) web.

Table 4 provides representative data for two finished structures.

**TABLE 4**

| Finished LaminateStiffnessResults | | |
|---|---|---|
| **Sample** | **Structure** | **MD/TD Rigidity g/cm** |
| 4.1 | print: ZN-1(nuc)/ZN-2 | 9.1/9.5 |
| | inner: ZN-2/SSC-1(nuc)/ZN-3 | |
| 4.2 | print: ZN-1(nuc)/ZN-2 | 5.4/4 |
| | inner: ZN-2/SSC-1(nuc)/ZN-3 | |

| | | |
|---|---|---|
| Notes: a) the print (or outer) web of sample 4.1 was machine direction oriented b) this sample was prepared with an ink that is believed to have reduced the rigidity but the SUP is still acceptable. | | |

### INDUSTRIAL APPLICABILITY

The Stand Up Pouches of this invention are suitable for packaging a wide variety of consumer goods, especially foods and drinks. The present SUP are recyclable whereas conventional SUP (which are made with a web of PET and a web of PE) are very difficult to recycle.

## Claims

1. A laminated structure that is made from polymeric material; said laminated structure comprising
A) an outer web comprising
A.1) a first-A layer, and
A.2) a second-A layer comprising polyethylene selected from the group consisting of LLDPE, MDPE and HDPE;
B) an inner web comprising
B.1) a first-B layer that is in contact with said outer web, wherein said first-B layer comprises polyethylene selected from the group consisting of LLDPE and MDPE;
B.2) a second-B layer comprising an HDPE composition; and
B.3) a third-B layer comprising a sealant composition, with the proviso that
I) said outer web is laminated to said inner web;
II) said laminated structure is printed at the interface between said outer layer and said inner layer; and
**characterized in that**
III) said HDPE, MDPE, LLDPE and sealant polyethylene collectively form at least 95 weight % of said polymeric material that is used to prepare said laminated structure;
further **characterized in that** the first-A layer comprises an HDPE composition.

2. The structure of claim 1 wherein said first A-layer comprises an HDPE composition containing a nucleating agent.

3. The structure of claim 1 or 2 wherein said outer web is subjected to a Machine Direction Orientation with a draw down ratio of from 2:1 to 10:1.

4. The structure of claim 1 wherein said second-B layer comprises an HDPE composition containing a nucleating agent.

5. The structure of claim 1 wherein said inner web further comprises a barrier layer, whenever said barrier layer is located between said first-B layer and said second-B layer.

6. The structure of claim 5 wherein said barrier layer comprises EVOH, with the further proviso that the total weight of said barrier layer is less than 5 weight %, based on the combined weight of said EVOH and the total weight of polyethylene used in said structure.

7. The structure of claim 6 wherein two tie layers are included, such that a first tie layer is located on one side of said barrier layer and a second tie layer is located on the other side of said barrier layer.

8. A stand up pouch that is prepared from the structure of any one of claims 1 to 5.

## Patentansprüche

1. Laminierte Struktur, die aus Polymermaterial besteht, wobei die laminierte Struktur Folgendes umfasst:
A) eine Außenbahn, die Folgendes umfasst
A.1) eine erste A-Lage und
A.2) eine zweite A-Lage, die Polyethylen umfasst, das aus der aus LLDPE, MDPE und HDPE bestehenden Gruppe ausgewählt ist;
B) eine Innenbahn, die Folgendes umfasst:
B.1) eine erste B-Lage, die in Kontakt mit der Außenbahn steht, wobei die erste B-Lage Polyethylen umfasst, das aus der aus LLDPE und MDPE bestehenden Gruppe ausgewählt ist;
B.2) eine zweite B-Lage, die eine HDPE-Zusammensetzung umfasst; und
B.3) eine dritte B-Lage, die eine Dichtungsmittelzusammensetzung umfasst, mit der Maßgabe, dass
I) die Außenbahn auf die Innenbahn laminiert ist;
II) die laminierte Struktur an der Grenzfläche zwischen der Außenlage und der Innenlage bedruckt ist; und
**dadurch gekennzeichnet, dass**
III) HDPE, MDPE, LLDPE und das Dichtungsmittelpolyethylen zusammen zumindest 95 Gew.-% des Polymermaterials bilden, das zur Herstellung der laminierten Struktur verwendet wird;
und außerdem **dadurch gekennzeichnet, dass** die erste A-Lage eine HDPE-Zusammensetzung umfasst.

2. Struktur nach Anspruch 1, wobei die erste A-Lage eine HDPE-Zusammensetzung umfasst, die einen Keimbildner umfasst.

3. Struktur nach Anspruch 1 oder 2, wobei die Außenbahn einer Ausrichtung in Maschinenrichtung mit einem Reckverhältnis von 2:1 bis 10:1 unterzogen ist.

4. Struktur nach Anspruch 1, wobei die zweite B-Lage eine HDPE-Zusammensetzung umfasst, die einen Keimbildner enthält.

5. Struktur nach Anspruch 1, wobei die Innenbahn außerdem immer dann eine Barrierelage umfasst, wenn die Barrierelage zwischen der ersten B-Lage und der zweiten B-Lage angeordnet ist.

6. Struktur nach Anspruch 5, wobei die Barrierelage EVOH umfasst, mit der weiteren Maßgabe, dass das Gesamtgewicht der Barrierelage weniger als 5 Gew.-% bezogen auf das kombinierte Gewicht von EVOH und dem Gesamtgewicht des in der Struktur verwendeten Polyethylens beträgt.

7. Struktur nach Anspruch 6, wobei zwei Verbindungslagen eingeschlossen sind, so dass eine erste Verbindungslage auf einer Seite der Barrierelage und eine zweite Verbindungslage auf der anderen Seite der Barrierelage angeordnet ist.

8. Selbststehender Beutel, der aus einer Struktur nach einem der Ansprüche 1 bis 5 hergestellt ist.

## Revendications

1. Structure stratifiée qui est constituée de matériau polymère ; ladite structure stratifiée comprenant
A) une bande externe comprenant
A.1) une première couche A, et
A.2) une deuxième couche A comprenant un polyéthylène choisi dans le groupe constitué de LLDPE, MDPE et HDPE ;
B) une bande interne comprenant
B.1) une première couche B qui est en contact avec ladite bande externe, dans laquelle ladite première couche B comprend un polyéthylène choisi dans le groupe constitué de LLDPE et MDPE ;
B.2) une deuxième couche B comprenant une composition de HDPE ; et
B.3) une troisième couche B comprenant une composition d'agent de scellement, à condition que
I) ladite bande externe est stratifiée sur ladite bande interne ;
II) ladite structure stratifiée est imprimée à l'interface entre ladite couche externe et ladite couche interne ; et
**caractérisée en ce que**
III) lesdits HDPE, MDPE, LLDPE et polyéthylène de scellement forment collectivement au moins 95 % en poids dudit matériau polymère qui est utilisé pour préparer ladite structure stratifiée ;
**caractérisée en outre en ce que** la première couche A comprend une composition de HDPE.

2. Structure selon la revendication 1, dans laquelle ladite première couche A comprend une composition de HDPE contenant un agent de nucléation.

3. Structure selon la revendication 1 ou 2, dans laquelle ladite bande externe est soumise à une orientation direction machine avec un rapport d'étirage de 2:1 à 10:1.

4. Structure selon la revendication 1, dans laquelle ladite deuxième couche B comprend une composition de HDPE contenant un agent de nucléation.

5. Structure selon la revendication 1, dans laquelle ladite bande interne comprend en outre une couche de barrière, lorsque ladite couche de barrière est située entre ladite première couche B et ladite deuxième couche B.

6. Structure selon la revendication 5, dans laquelle ladite couche de barrière comprend EVOH, à condition en outre que le poids total de ladite couche de barrière soit inférieur à 5 % en poids, sur la base du poids combiné dudit EVOH et du poids total de polyéthylène utilisé dans ladite structure.

7. Structure selon la revendication 6, dans laquelle deux couches de liaison sont incluses, de sorte qu'une première couche de liaison soit située sur un côté de ladite couche de barrière et qu'une deuxième couche de liaison soit située sur l'autre côté de ladite couche de barrière.

8. Sachet tenant debout qui est préparé à partir de la structure selon l'une quelconque des revendications 1 à 5.
